# EUROPEAN PATENT APPLICATION

(11) **EP 3 384 985 A1**
(43) Date of publication of application: **10.10.2018**
(21) Application number: 16870625.7
(22) Date of filing: 28.11.2016
(51) Int. Cl.: B01J 23/83, C01B 3/40

(54) **STEAM REFORMING CATALYST FOR HYDROCARBONS**

(30) Priority: 30.11.2015 JP 2015233257
(71) Applicant: Santoku Corporation, Kobe-shi Hyogo 658-0013 (JP)
(72) Inventor: MUROTA Tadatoshi, Kobe-shi Hyogo 658-0013 (JP); TAHARA Tomonori, Kobe-shi Hyogo 658-0013 (JP)
(74) Representative: Cockerton, Bruce Roger
(86) International application number: PCT/JP2016/085253
(87) International publication number: WO 2017/094688

(57) **Abstract**

There is provided a steam reforming catalyst comprising a carrier and a catalyst supported thereon. The carrier contains a composite oxide containing Ce and Zr. The content of the Ce is not less than 1.0 mol and not more than 3.0 mol per 1 mol of the Zr. The catalyst contains Ni and Ti. The content of the Ni is not less than 70% and not more than 97% by mole, and the content of the Ti is not less than 3% and not more than 30% by mole, based on 100% by mole of the total of the Ni and Ti.

## Description

The present invention relates to a steam reforming catalyst containing Ni and Ti for reforming a hydrocarbon.

In recent years, various researches have been actively made on fuel cell vehicles, household fuel cells, hydrogen power generation systems, and the like, for the purpose of realizing hydrogen society utilizing hydrogen energy. Also various hydrogen production technologies have been researched, and currently steam reforming processes, which contains reforming a hydrocarbon via a reaction with a water vapor to produce hydrogen, are mainly studied. A catalyst is needed to efficiently carry out the steam reforming reaction, and examples of such catalysts include noble metal catalysts and Ni-based catalysts.

It is well known that the steam reforming catalyst for reforming the hydrocarbon is inactivated when poisoned by a sulfur content in the hydrocarbon material. In general, in the hydrogen production process, a desulfurization step for removing the sulfur content from the hydrocarbon material is performed before the reforming step. However, even when only a trace amount of the sulfur content remains in the hydrocarbon material, the sulfur content is adsorbed to the catalyst to lower the catalytic activity. Therefore, an advanced desulfurization apparatus is required in the desulfurization step to increase the hydrogen production cost.

Accordingly, the catalyst per se is required to have an improved sulfur tolerance. As a catalyst having an excellent resistance to the sulfur poisoning, Patent Publication 1 discloses a catalyst containing ruthenium and rhodium on a carrier. Furthermore, Patent Publication 2 discloses a catalyst containing rhodium or iridium, nickel, rhenium, and a metal of Group Ia or IIa of the periodic table on a carrier.
Patent Publication 1: JP 2004-082033 A
Patent Publication 2: JP 2007-054721 A

However, the catalysts containing the noble metals described in Patent Publications 1 and 2 result in cost increase. It is important to reduce the hydrogen production cost for diffusing the use of hydrogen as an energy source. Therefore, there is a demand for developing a low-cost steam reforming catalyst with excellent sulfur tolerance.

In view of the above problem of the conventional technologies, an object of the present invention is to provide a steam reforming catalyst for reforming a hydrocarbon that can be produced at low cost, can prevent sulfur adsorption, and can prevent activity reduction by sulfur poisoning.

As a result of intense research, the inventors have found that a hydrocarbon steam reforming catalyst with excellent sulfur tolerance can be obtained by using a composite oxide containing particular amounts of Ce and Zr for a catalyst carrier and by depositing particular amounts of Ni and Ti on the catalyst carrier. The present invention has been accomplished based on the finding.

According to the present invention, there is provided a steam reforming catalyst for reforming a hydrocarbon, comprising a catalyst carrier, Ni, and Ti, wherein the catalyst carrier contains a composite oxide containing Ce and Zr, the content of the Ce being not less than 1.0 mol and not more than 3.0 mol per 1 mol of the Zr, and the Ni and Ti are supported on the catalyst carrier, the content of the Ni being not less than 70% and not more than 97% by mole, and the content of the Ti being not less than 3% and not more than 30% by mole, based on 100% by mole of the total of the Ni and Ti.

The steam reforming catalyst of the present invention contains the catalyst carrier containing particular amounts of the particular elements, and further contains particular amounts of the Ni and Ti supported on the catalyst carrier. Consequently, the steam reforming catalyst can prevent the catalytic activity reduction by the sulfur poisoning, and can maintain a high conversion from the hydrocarbon to hydrogen, without using expensive noble metals.

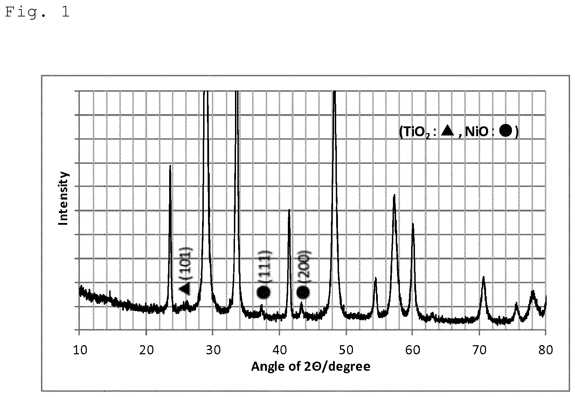

Fig. 1 is a diagram showing an X-ray diffraction pattern of a steam reforming catalyst according to Example 1.

The present invention will be described in detail below.

The steam reforming catalyst of the present invention for reforming a hydrocarbon is obtained by depositing Ni and Ti on a catalyst carrier. The catalyst carrier contains a composite oxide containing Ce and Zr.

In the present invention, the composite oxide used for the catalyst carrier contains the Ce and Zr, and may further contain an additional element. In the composite oxide, the content of the Ce is not less than 1.0 mol and not more than 3.0 mol per 1 mol of the Zr. The Ce content per 1 mol of the Zr is preferably not less than 2.0 mol and not more than 3.0 mol, more preferably not less than 2.5 mol and not more than 3.0 mol.

The composite oxide contains the Ce and Zr at the above molar ratio, and is used in combination with the catalyst containing the Ni and Ti. Consequently, the steam reforming catalyst can maintain an excellent hydrocarbon conversion for a long time, and the catalyst carrier can exhibit an excellent heat resistance.

Examples of the additional elements usable in the composite oxide include W, Si, and rare-earth elements other than Ce. The additional element is preferably Pr, La, Y, or Nd, particularly preferably Pr. The crystal structure of the composite oxide can be stabilized to improve the heat resistance by using such additional element. The content of the additional element is preferably not less than 0.1 mol and not more than 1.0 mol per 1 mol of the Zr.

The catalyst carrier may further contain an oxide of Al. In this case, the Al may be contained in the composite oxide together with the Ce and Zr. Alternatively, the catalyst carrier may be a mixture containing the Al oxide and the composite oxide of the Ce and Zr. For example, the Al oxide may be derived from an inorganic binder used in the process of forming the catalyst carrier. When an Al-containing inorganic binder is used in the process of forming the catalyst carrier, the hardness of the catalyst carrier can be improved.

In the steam reforming catalyst of the present invention, an inevitable impurity derived from a starting material or the like may be contained in the composite oxide.

Specifically, for example, the composite oxide containing the Ce and Zr may be Ce_{0.5}Zr_{0.5}O₂, Ce_{0.75}Zr_{0.25}O₂, Ce_{0.476}Zr_{0.476}Pr_{0.048}O₂, Ce_{0.73}Zr_{0.245}Pr_{0.025}O₂, Ce_{0.625}Zr_{0.25}Pr_{o.125}O₂, etc. Among them, from the viewpoint of the heat resistance, Ce_{0.73}Zr_{0.245}Pr_{0.025}O₂ and Ce_{0.625}Zr_{0.25}Pr_{0.125}O₂ are preferred, and Ce_{0.625}Zr_{0.25}Pr_{0.125}O₂ is particularly preferred.

A method for preparing the composite oxide used in the present invention will be described below.

The composite oxide may be prepared by forming a precipitate via a wet process and by calcining the precipitate. For example, the composite oxide may be prepared by a method containing the steps of (a) heating an aqueous zirconium solution containing Zr ions, (b-1) mixing the aqueous zirconium solution with an aqueous cerium solution containing Ce ions to prepare a mixed aqueous solution, 80% to 100% by mole of the Ce ions being tetravalent in the aqueous cerium solution, and then heating the mixed aqueous solution, (b-2) optionally mixing the solution obtained from the step (b-1) with an aqueous solution containing ions of the additional element other than the Ce and Zr (hereinafter referred to as the aqueous additional element solution) if necessary, (c) mixing the solution obtained from the step (b-1) or (b-2) with an aqueous alkaline solution containing a surfactant to obtain a precipitate, and (d) calcining the obtained precipitate in an oxidative atmosphere.

Each of the aqueous zirconium solution, the aqueous cerium solution, and the aqueous additional element solution may be prepared by dissolving a salt of the Zr, Ce, or additional element in water. The aqueous zirconium solution may be an aqueous zirconium hydroxide solution, an aqueous zirconium chloride solution, an aqueous zirconium nitrate solution, an aqueous zirconium oxynitrate solution, or the like, and is preferably the aqueous zirconium oxynitrate solution. The aqueous cerium solution may be an aqueous cerium (IV) nitrate solution, an aqueous cerium (IV) ammonium nitrate solution, or the like, and is particularly preferably the aqueous cerium (IV) nitrate solution. The salt of the additional element may be a water-soluble salt such as a nitrate salt, a sulfate salt, or an acetate salt.

For example, the aqueous alkaline solution may be prepared by dissolving in water ammonia, sodium hydroxide, potassium hydroxide, ammonium hydrogen carbonate, sodium carbonate, sodium hydrogen carbonate, or the like. In particular, the aqueous alkaline solution preferably contains ammonia. The amount of an alkali in the aqueous alkaline solution is preferably 1.1 to 5 times as large as the theoretical amount for neutralizing the zirconium ions, the cerium ions, and the additional element ions to generate the precipitate.

The surfactant may be an anionic surfactant (such as an ethoxy carboxylate or a carboxylate salt), a non-ionic surfactant (such as an alcohol ethoxylate or a polyethylene glycol), or a mixture thereof, and is particularly preferably a carboxylate salt. Preferred examples of such carboxylate salts include salts of saturated carboxylic acids such as decanoate salts, laurate salts, myristate salts, and palmitate salts. Among them, the laurate salts are particularly preferred. In particular, the carboxylate salt is preferably an ammonium salt.

The content of the surfactant in the aqueous alkaline solution is preferably about 1.0% to 3.5% by mass. The surfactant may be used in the form of a solid or a solution. The solution may be prepared by diluting or dissolving the surfactant with or in a solvent such as an alcohol or pure water. The mixing may be performed by using a known mixer.

In the step (a), a closed- or open-type reaction container may be used for the heating. An autoclave reactor can be preferably used as the reaction container. The heating temperature is usually 60°C or higher, preferably not lower than 60°C and not higher than 200°C, particularly preferably not lower than 80°C and not higher than 180°C. The heating time is usually not less than 10 minutes and not more than 48 hours, preferably not less than 30 minutes and not more than 36 hours, more preferably not less than 1 hour and not more than 24 hours. A reaction such as a hydrolysis reaction is carried out by heating the aqueous zirconium solution to generate fine particles containing a Zr hydroxide, Zr oxyhydroxide, Zr oxide, hydrate thereof, or the like. The reaction such as the hydrolysis reaction proceeds more completely under a condition of a higher heating temperature or a longer heating time. However, under such a condition, the generated fine Zr particles may be excessively oxidized or grown, whereby it may become difficult to uniformly mix the fine particles with the Ce in the step (b-1). Thus, in the step (a), it is preferred that the heating conditions are appropriately selected depending on the state of the aqueous zirconium solution before the heating.

The concentration of the aqueous zirconium solution is preferably not less than 1.0 g/L and not more than 50.0 g/L, further preferably not less than 5.0 g/L and not more than 30.0 g/L, in terms of ZrO₂. When the concentration of the aqueous zirconium solution is lower than this range, the productivity may be lowered although the reaction such as the hydrolysis reaction tends to proceed readily. On the other hand, when the concentration of the aqueous zirconium solution is excessively higher, the reaction such as the hydrolysis reaction tends to proceed less readily.

In the step (b-1), when the aqueous cerium solution contains the tetravalent Ce ions, a reaction such as a hydrolysis reaction can be readily carried out. It is preferred that 95% by mole or more of the Ce ions in the aqueous cerium solution are tetravalent.

The heating in the step (b-1) may be carried out under the same conditions as the heating in the step (a). The reaction such as the hydrolysis reaction is accelerated by heating the mixed aqueous solution, whereby fine particles containing a Ce hydroxide, Ce oxide, or hydrate thereof are generated and mixed uniformly with the above-described fine Zr particles. In this process, the fine Zr particles and the fine Ce particles may be partially dissolved and deposited repeatedly, whereby the Zr and Ce can be mixed at atomic level. Furthermore, the particles, which contain the Zr and Ce mixed uniformly at atomic level, can be grown.

The heating temperature and the heating time are considered to have an affect on the reaction such as the hydrolysis reaction and on the dissolution and deposition of the fine Zr particles and the fine Ce particles, and thus on the specific surface area of the final composite oxide product. The specific surface area has a relationship with the heat resistance.

The cerium concentration of the mixed aqueous solution is preferably not less than 10.0 g/L and not more than 50.0 g/L, further preferably not less than 15.0 g/L and not more than 30.0 g/L, in terms of CeO₂.

It is important to conduct the step (b-1) after the step (a). The reaction such as the hydrolysis reaction of the zirconium salt hardly proceeds under the presence of the cerium salt. Since the step (a) is carried out in the absence of the cerium salt, the fine Zr particles can be generated and prevented from being excessively oxidized or grown by appropriately selecting the heating conditions. Furthermore, since the aqueous zirconium solution is mixed with the aqueous cerium solution and the mixed aqueous solution is heated in the step (b-1) after the step (a), the fine Ce particles can be generated in the close vicinity of the fine Zr particles, the fine Ce particles and the fine Zr particles can be partially dissolved and deposited repeatedly, the Ce and Zr can be mixed uniformly at atomic level, and the particles containing the Ce and Zr can be grown. In a case where the particles are grown to a certain size in this step, the particles can be prevented from being excessively sintered in the following calcination step and in the use of the composite oxide at high temperature. Consequently, the resultant composite oxide can have a high heat resistance.

It is preferred that the step (b-2) is carried out to prepare the composite oxide containing an oxide of the additional element other than the Ce and Zr. In this case, the crystal structure of the composite oxide can be stabilized to improve the heat resistance. The oxide of the additional element other than the Ce and Zr is preferably a Pr oxide.

For example, the precipitate formed in the step (c) may be collected by filtration using Nutsche filter, filter press, centrifugal separator, or the like. The precipitate is preferably washed in the collection process. The precipitate may be washed by using a known method such as a decantation method. The collected precipitate may be dried before the next step. The drying may be carried out around a temperature of not less than 60°C and not more than 200°C. Alternatively, the dry precipitate may be isolated directly from the slurry by a spray drying method.

The precipitate, which contains the Ce and Zr and optionally contains the additional element if necessary, is obtained in the step (c). In the obtained precipitate, the surfactant is dispersed between the particles generated in the step (b-1). The surfactant acts as a so-called pore forming agent, whereby the precipitate can be converted to a porous composite oxide in the following calcination step. In the case of preparing such porous composite oxide, the particles can be prevented from being excessively sintered in the use of the composite oxide at high temperature. Consequently, the resultant composite oxide can have an improved heat resistance.

In the step (d), the calcination may be carried out in the oxidative atmosphere. The calcination conditions are not particularly limited as long as the precipitate obtained in the step (c) can be decomposed and oxidized to prepare the composite oxide under the conditions. The calcination temperature is usually not lower than 250°C and not higher than 700°C, preferably not lower than 300°C and not higher than 500°C. The calcination time may be appropriately selected depending on the calcination temperature. The calcination time may be within the range of not less than 1 hour and not more than 10 hours.

After the calcination in the step (d), the calcined product may be pulverized to prepare a powder of the oxide. A method for the pulverization is not particularly limited, and may be selected from known methods. The average particle diameter (D50) of the powder is preferably not less than 1.0 µm and not more than 50.0 µm, further preferably not less than 1.0 µm and not more than 10.0 µm. The average particle diameter (D50) may be measured by a laser diffraction scattering-type particle size distribution measurement apparatus MICROTRAC 3000 (trade name, available from Nikkiso Co., Ltd.).

A binder or pure water may be added to the powder of the oxide as required, to prepare a clay-like mixture. The binder may be a water-dispersible alumina sol, a methylcellulose, or the like.

The clay-like mixture may be extrusion-molded, cut by a cutter, and formed into a spherical shape by a spherical granulator. The particle diameter of thus-obtained particle is preferably not less than 1 mm and not more than 5 mm, further preferably not less than 2 mm and not more than 3 mm. Incidentally, in the case of using an alumina sol as the binder, the composite oxide may contain an aluminum oxide as described above.

The obtained spherical compact may be calcined in the air to prepare the catalyst carrier. The calcination conditions are not particularly limited as long as water and an organic component in the binder can be removed from the spherical compact under the conditions. Usually the calcination temperature may be not lower than 400°C and not higher than 1,000°C, and the calcination time may be not less than 1 hour and not more than 24 hours.

The specific surface area of the catalyst carrier used in the present invention is preferably not less than 10 m²/g and not more than 200 m²/g, more preferably not less than 30 m²/g and not more than 50 m²/g. When the specific surface area is smaller than 10 m²/g, the contact area between the catalyst carrier and the hydrocarbon may be insufficient, thereby failing to efficiently carry out the reforming reaction. On the other hand, the specific surface area of larger than 200 m²/g results in excessively high production costs, and therefore is impractical. For example, a preferred specific surface area can be achieved by controlling the heating temperature and the heating time in the step (b-1), the step (d), and/or the step of calcining the spherical compact.

The Ni and Ti are deposited on the catalyst carrier containing the composite oxide. When the total content of the Ni and Ti is 100% by mole, the content of the Ni is not less than 70% and not more than 97% by mole, and the content of the Ti is not less than 3% and not more than 30% by mole. The Ni content is preferably not less than 80% and not more than 97% by mole, more preferably not less than 90% and not more than 97% by mole. The Ti content is preferably not less than 3% and not more than 20% by mole, more preferably not less than 3% and not more than 10% by mole. When the contents are controlled within the above ranges, the hydrocarbon conversion is hardly deteriorated even after sulfur poisoning. In particular, when the Ti content is 5% by mole or less, both of significantly excellent catalytic performance and sulfur tolerance can be achieved advantageously.

The mass ratio of the Ni to 100 parts by mass of the catalyst carrier containing the composite oxide is preferably not less than 0.1 part and not more than 10 parts by mass, more preferably not less than 1 part and not more than 5 parts by mass, and further preferably not less than 2 parts and not more than 4 parts by mass.

The mass ratio of the Ti to 100 parts by mass of the catalyst carrier is preferably not less than 0.0025 parts and not more than 3.5 parts by mass, more preferably not less than 0.025 part and not more than 1.75 parts by mass, and further preferably not less than 0.05 parts and not more than 1.4 parts by mass.

When the mass ratios of the deposited Ni and Ti are within the above ranges, the steam reforming catalyst can exhibit a satisfactory catalytic activity, and the sulfur poisoning can be prevented.

In the present invention, the roles of the Ni and Ti are not elucidated completely. The Ni is considered to act as an active metal, and the Ti is considered to act to prevent adsorption of a sulfur component.

In addition to the Ni and Ti, one or more elements selected from the group consisting of V, Cr, Mn, Fe, Co, and Cu may be deposited on the catalyst carrier. The total mass ratio of the elements to the catalyst carrier containing the composite oxide is preferably 5% by mass or less. An inevitable impurity derived from a starting material or the like may be deposited on the catalyst carrier.

The Ni and Ti may be deposited on the catalyst carrier by a known method. For example, the Ni and Ti may be deposited by putting the catalyst carrier into an aqueous solution containing the Ni and Ti dissolved, thereby attaching the Ni and Ti onto the catalyst carrier, and by calcining the resultant. The aqueous solution containing the Ni and Ti may be prepared by dissolving an Ni salt and a Ti salt in water. The Ni salt and the Ti salt may be selected from water-soluble salts such as nitrate salts, sulfate salts, and acetate salts. The calcination may be performed in the air, and the calcination temperature is usually not lower than 250°C and not higher than 800°C, preferably not lower than 300°C and not higher than 600°C. The calcination time may be appropriately selected depending on the calcination temperature, and usually may be 1 to 10 hours.

The calcined product may be used as the catalyst of the present invention without modification. Alternatively, the calcined product may be subjected to an activation treatment such as an oxidation treatment if necessary.

Also a reduction treatment is known as the activation treatment for the catalyst. For example, a catalyst, which is produced by depositing Ni and Ti on an alumina carrier, exhibits a significantly low catalytic activity without the reduction treatment. In contrast, in the present invention, even when the reduction treatment is not carried out, a satisfactory catalytic activity can be achieved by using particular amounts of the Ni and Ti in combination with the particular catalyst carrier containing the Ce and Zr. Although it is not clear why such an advantageous effect is achieved in the present invention, the effect seems to be due to an Ni-O-Zr bond formed via oxygen loss (or oxygen defect) in the particular catalyst carrier. In the present invention, the reduction treatment is not preferred. The Ni and Ti may be alloyed during the reduction treatment, so that the hydrocarbon conversion and the resistance to the sulfur poisoning may be lowered.

Although the Ni-O-Zr bond formed via oxygen loss cannot be clearly identified, the Ni-O-Zr bond is considered to be formed in such a manner that the deposited Ni atom is oxidized to generate NiO, and the NiO is introduced into an oxygen defect site in the Ce-Zr composite oxide. Thus, the deposited Ni atom is considered to act as metallic Ni even in the form of the oxide via the formation of the Ni-O-Zr bond, thereby resulting in the excellent catalytic activity.

The steam reforming catalyst of the present invention is such that the Ni and Ti is supported on the catalyst carrier that contains the composite oxide containing the Ce and Zr. It is preferred that the Ni and Ti are present on an outer surface of the catalyst carrier. The presence on the outer surface can be confirmed by observing a cross section of the catalyst using an electron probe microanalyzer (EPMA) .

The catalyst carrier is a porous body having a large number of fine pores. In the present invention, the term "an outer surface of the catalyst carrier" means a surface that is in contact with the ambient air when the catalyst carrier is in the air atmosphere.

The Ni and Ti may be chemically bonded or physically adsorbed to the catalyst carrier. Each of the Ni and Ti may be in the form of a simple metal substance, an oxide, or a mixture thereof on the outer surface of the catalyst carrier. It is not preferred that an alloy of the Ni and Ti is formed. When the alloy is formed, the Ni and Ti may have an insufficient resistance to the sulfur poisoning.

In the present invention, the term "alloy" means a substance containing a metal element with another metal element or a non-metal element, wherein the elements form a solid solution, a eutectic composition, or an intermetallic compound. Whether or not the Ni and Ti form the alloy can be confirmed by X-ray diffraction measurement.

The steam reforming catalyst of the present invention can be used for reforming the hydrocarbon. Examples of the hydrocarbons include methane, ethane, and propane. For example, in a propane reforming process, the steam reforming catalyst is preferably used at a temperature of 400°C to 1,000°C. The hydrocarbon conversion can be measured by a gas chromatography. The hydrocarbon conversion of the steam reforming catalyst is usually 80% to 100%, preferably 90% to 100%, more preferably 100%.

The hydrocarbon conversion is obtained as follows. The hydrocarbon to be reformed is introduced into a reaction tube, and the concentrations of carbon monoxide, carbon dioxide, and all hydrocarbons in the resultant gas are each measured at an outlet of the reaction tube. The concentration is a volume ratio (% by volume) of each compound to the resultant gas discharged through the outlet of the reaction tube. Then, the hydrocarbon conversion is calculated from the ratio of (Total of concentrations of carbon monoxide, carbon dioxide, and hydrocarbons with carbon numbers smaller than the introduced hydrocarbon) to (Total of concentrations of carbon monoxide, carbon dioxide, and all hydrocarbons).

For example, in a case where a propane gas is used as the introduced gas (the hydrocarbon to be reformed), the hydrocarbon conversion is calculated using the following equation: Hydrocarbon conversion (%) = [(CO + CO₂ + methane + ethane) / (CO + CO₂ + methane + ethane + propane)] × 100. In the equation, each compound name represents the concentration (% by volume) of the compound.

The steam reforming catalyst of the present invention has an excellent sulfur tolerance. The sulfur tolerance of the steam reforming catalyst may be evaluated by measuring the hydrocarbon conversion after a sulfur poisoning treatment to be described below. In conventional arts, the hydrocarbon conversion of a known catalyst is lowered by the sulfur poisoning to 30% to 60% or less of the initial hydrocarbon conversion rate (initial performance) measured before the sulfur poisoning. In contrast, the steam reforming catalyst of the present invention is capable of highly effectively preventing the sulfur poisoning, and thereby can maintain a hydrocarbon conversion of 90% or more of the initial performance over a long time.

A specific example of the propane conversion measurement for evaluating the sulfur tolerance of the steam reforming catalyst will be described below.

### (Propane conversion)

First, 50.0 mg of the steam reforming catalyst is fixed by sandwiching the top and bottom of the catalyst between quartz glass wool in a fixed-bed reaction tube composed of a quartz glass (inner diameter 11 mm). A nitrogen gas flow is supplied at 90 mL/minute to the reaction tube, and the temperature of the reaction tube is raised from room temperature to 650°C over 1.5 hours. After the temperature reaches 650°C, the reaction tube is maintained at the temperature for 1 hour. Then, a mixed gas containing propane and water (propane:water = 1:2.2, S/C = 2.2) is supplied at a space velocity (SV) of 3,000 h⁻¹ to the reaction tube using a nitrogen gas as a carrier gas, and the measurement of the conversion from the propane to hydrogen is started. Four outlet gas samples are subjected to a gas chromatography analysis every 13 minutes, and the average of the four samples are calculated.

### (Propane conversion after sulfur poisoning treatment)

After the above propane conversion measurement, a mixed gas prepared by adding 50 ppm of an SO₂ gas to a nitrogen gas is supplied to the reaction tube at 800°C for 1 hour, whereby the catalyst is subjected to the sulfur poisoning treatment. Then, the mixed gas flow is stopped, and a nitrogen gas is supplied to discharge the mixed gas remaining in the reaction tube. After the mixed gas is sufficiently discharged, the conversion from the propane to hydrogen is measured in the same manner as above.

The present invention will be described in more detail below with reference to Examples and Comparative Examples without intention of restricting the scope of the present invention.

### (Example 1)

37.5 g of a zirconium oxynitrate solution (7.5 g in terms of ZrO₂), 10.35 g of nitric acid (7.0 g in terms of HNO₃), and 900 mL of pure water were added to a 2-L separable beaker, and the resultant mixture was stirred to prepare an aqueous zirconium solution.

The aqueous zirconium solution was heated to 98°C by a mantle heater, and stirred under heating reflux for 8 hours [step (a)].

Then, 131 mL of a cerium (IV) nitrate solution (an aqueous cerium solution, 26.2 g in terms of CeO₂) was added to the aqueous zirconium solution to prepare a mixed aqueous solution. The mixed aqueous solution was heated to 98°C again by a mantle heater, and stirred under heating reflux for 20 hours [step (b-1)].

The solution obtained from the step (b-1) was put into a 3,000-mL beaker, and 10.4 mL of a praseodymium nitrate solution (an aqueous additional element solution, 5.2 g in terms of Pr₂O₃) and 1,000 mL of pure water were added to the beaker. The resultant mixture was stirred to prepare a mixed solution containing Zr, Ce, and Pr [step (b-2)].

10.1 g of lauric acid was added to 400 mL of 12.5% aqueous ammonia, and the mixture was stirred until it became transparent, to prepare an aqueous ammonium laurate/ammonia solution. The mixed solution obtained in the step (b-2) was added at 50 mL/min by a proportioning pump to the aqueous ammonium laurate/ammonia solution while stirring, to prepare a suspension. The suspension was filtrated by using a Buchner funnel, and was washed by supplying 1,000 mL of pure water to the Buchner funnel, to prepare a precipitate [step (c)].

The precipitate was calcined in an oxidative atmosphere (in the air) at 400°C for 5 hours [step (d)].

Then, the calcined body was pulverized by a mortar to obtain a powder of an oxide.

38.9 g of the obtained oxide powder, 19.5 g of an alumina sol BIRAL AL-7 available from Taki Chemical Co., Ltd., 1.17 g of a methylcellulose, and 15 mL of pure water were mixed to prepare a clay-like mixture.

The clay-like mixture was extrusion-molded by an extruder having an outlet with a diameter of 3 mm, the molded mixture was cut into 3-mm-length pieces by a cutter, and the pieces were rounded by a spherical granulator to obtain a spherical compact having a diameter of 3 mm.

The spherical compact having a diameter of 3 mm was calcined at 1,000°C for 5 hours to prepare a catalyst carrier for steam reforming.

9.41 g of nickel nitrate hexahydrate and 1.0 g of a titanium tetrachloride solution were dissolved in 20 mL of pure water to prepare a solution, and 10 g of the catalyst carrier was immersed in the solution. The resultant mixture was stirred for 24 hours, and then subjected to filtration. The catalyst carrier having the Ni and Ti remained on the filter paper, and was collected and calcined at 500°C for 5 hours, to produce a steam reforming catalyst.

The content of each element in the obtained steam reforming catalyst was measured. The results are shown in Table 1. The contents of Zr, Ce, Pr, and Al shown in Table 1 are mass ratios (% by mass) in the catalyst carrier in terms of ZrO₂, CeO₂, Pr₂O₃, and Al₂O₃ respectively. The contents of Ni and Ti shown in Table 1 are mass ratios (parts by mass) to 100 parts by mass of the catalyst carrier.

The Ce content per 1 mol of the Zr was 2.5 mol. The Ni content was 83.6% by mole, and the Ti content was 16.4% by mole.

An X-ray diffraction pattern of the steam reforming catalyst of Example 1 is shown in Fig. 1. The X-ray diffraction pattern was measured by Ultima IV available from Rigaku Corporation.

A propane steam reforming reaction was carried out using the steam reforming catalyst of Example 1 under conditions of SV 3,000 h⁻¹, reaction temperature 650°C, and S/C 2.2, and the propane conversion was measured. Furthermore, a flow of a nitrogen-based gas containing 50 ppm of SO₂ was supplied to the steam reforming catalyst at 800°C for 1 hour, whereby a sulfur poisoning treatment was performed. After the sulfur poisoning treatment, the propane steam reforming reaction was carried out, and the propane conversion was measured, in the same manner as above. The results are shown in Table 2.

### (Example 2)

A steam reforming catalyst of Example 2 was produced in the same manner as Example 1 except that the amount of the cerium (IV) nitrate solution used in the step (b-1) was 52.5 mL (10.5 g in terms of CeO₂), the amount of the praseodymium nitrate solution used in the step (b-2) was 2.1 mL (1.05 g in terms of Pr₂O₃), the amount of the alumina sol BIRAL AL-7 available from Taki Chemical Co., Ltd. was 9.53 g, and the amount of the methylcellulose was 0.57 g. The steam reforming catalyst of Example 2 was subjected to the measurements in the same manner as Example 1. The results are shown in Tables 1 and 2.

The Ce content per 1 mol of the Zr was 1.0 mol. The Ni content was 83.6% by mole, and the Ti content was 16.4% by mole.

### (Example 3)

A steam reforming catalyst of Example 3 was produced in the same manner as Example 1 except that the amount of the cerium (IV) nitrate solution used in the step (b-1) was 157.5 mL (31.5 g in terms of CeO₂), the amount of the praseodymium nitrate solution used in the step (b-2) was 2.1 mL (1.05 g in terms of Pr₂O₃), the amount of the alumina sol BIRAL AL-7 available from Taki Chemical Co., Ltd. was 20.0 g, and the amount of the methylcellulose was 1.2 g. The steam reforming catalyst of Example 3 was subjected to the measurements in the same manner as Example 1. The results are shown in Tables 1 and 2.

The Ce content per 1 mol of the Zr was 3.0 mol. The Ni content was 83.6% by mole, and the Ti content was 16.4% by mole.

### (Example 4)

A steam reforming catalyst of Example 4 was produced in the same manner as Example 1 except that the amount of the titanium tetrachloride solution was 2.0 g. The steam reforming catalyst of Example 4 was subjected to the measurements in the same manner as Example 1. The results are shown in Tables 1 and 2.

The Ce content per 1 mol of the Zr was 2.5 mol. The Ni content was 70.8% by mole, and the Ti content was 29.2% by mole.

### (Example 5)

A steam reforming catalyst of Example 5 was produced in the same manner as Example 1 except that the amount of the titanium tetrachloride solution was 0.2 g. The steam reforming catalyst of Example 5 was subjected to the measurements in the same manner as Example 1. The results are shown in Tables 1 and 2.

The Ce content per 1 mol of the Zr was 2.5 mol. The Ni content was 96.2% by mole, and the Ti content was 3.8% by mole.

### (Example 6)

A steam reforming catalyst of Example 6 was produced in the same manner as Example 1 except that the praseodymium nitrate solution was not added in the step (b-2), the amount of the alumina sol BIRAL AL-7 available from Taki Chemical Co., Ltd. was 16.9 g, and the amount of the methylcellulose was 1.0 g. The steam reforming catalyst of Example 6 was subjected to the measurements in the same manner as Example 1. The results are shown in Tables 1 and 2.

The Ce content per 1 mol of the Zr was 2.5 mol. The Ni content was 83.6% by mole, and the Ti content was 16.4% by mole.

### (Comparative Example 1)

A steam reforming catalyst of Comparative Example 1 was produced in the same manner as Example 1 except that the titanium tetrachloride solution was not added. The steam reforming catalyst of Comparative Example 1 was subjected to the measurements in the same manner as Example 1. The results are shown in Tables 1 and 2.

The Ce content per 1 mol of the Zr was 2.5 mol. The Ni content was 100% by mole, and the Ti content was 0% by mole.

### (Comparative Example 2)

A steam reforming catalyst of Comparative Example 2 was produced in the same manner as Example 1 except that the amount of the titanium tetrachloride solution was 0.1 g. The steam reforming catalyst of Comparative Example 2 was subjected to the measurements in the same manner as Example 1. The results are shown in Tables 1 and 2.

The Ce content per 1 mol of the Zr was 2.5 mol. The Ni content was 98.1% by mole, and the Ti content was 1.9% by mole.

### (Comparative Example 3)

A steam reforming catalyst of Comparative Example 3 was produced in the same manner as Example 1 except that the amount of the titanium tetrachloride solution was 4.0 g. The steam reforming catalyst of Comparative Example 3 was subjected to the measurements in the same manner as Example 1. The results are shown in Tables 1 and 2.

The Ce content per 1 mol of the Zr was 2.5 mol. The Ni content was 54.8% by mole and the Ti content was 45.2% by mole.

### (Comparative Example 4)

A steam reforming catalyst of Comparative Example 4 was produced in the same manner as Example 1 except that an alumina carrier was used as the catalyst carrier for the steam reforming catalyst. The steam reforming catalyst of Comparative Example 4 was subjected to the measurements in the same manner as Example 1. The results are shown in Tables 1 and 2.

The Ce content per 1 mol of the Zr was 2.5 mol. The Ni content was 83.6% by mole, and the Ti content was 16.4% by mole.

**Table 1**

| | Catalyst carrier | | | | Ni (parts by mass) | Ti (parts by mass) |
|---|---|---|---|---|---|---|
| | Zr (% by mass) | Ce (% by mass) | Pr (% by mass) | Al (% by mass) | | |
| Ex. 1 | 17.90 | 62.60 | 12.50 | 7.00 | 3.00 | 0.50 |
| Ex.2 | 36.50 | 51.40 | 5.10 | 7.00 | 3.00 | 0.50 |
| Ex.3 | 17.40 | 73.20 | 2.40 | 7.00 | 3.00 | 0.50 |
| Ex.4 | 17.90 | 62.60 | 12.50 | 7.00 | 3.00 | 1.00 |
| Ex. 5 | 17.90 | 62.60 | 12.50 | 7.00 | 3.00 | 0.10 |
| Ex. 6 | 20.70 | 72.30 | 0.00 | 7.00 | 3.00 | 0.50 |
| Comp. Ex. 1 | 17.90 | 62.60 | 12.50 | 7.00 | 3.00 | 0.00 |
| Comp. Ex. 2 | 17.90 | 62.60 | 12.50 | 7.00 | 3.00 | 0.05 |
| Comp. Ex. 3 | 17.90 | 62.60 | 12.50 | 7.00 | 3.00 | 2.00 |
| Comp. Ex. 4 | 0.00 | 0.00 | 0.00 | 100 | 3.00 | 0.50 |

**Table 2**

| | Propane conversion (%) | Propane conversion after sulfur poisoning (%) |
|---|---|---|
| Ex. 1 | 99.8 | 92.1 |
| Ex. 2 | 94.5 | 90.7 |
| Ex. 3 | 97.8 | 93.4 |
| Ex. 4 | 97.3 | 93.1 |
| Ex. 5 | 99.4 | 94.8 |
| Ex. 6 | 95.1 | 89.4 |
| Comp. Ex. 1 | 99.8 | 62.1 |
| Comp. Ex. 2 | 99.8 | 68.4 |
| Comp. Ex. 3 | 99.8 | 73.4 |
| Comp. Ex. 4 | 0 | 0 |

As is clear from Tables 1 and 2, the steam reforming catalysts of Examples can exhibit significantly higher propane conversion after the sulfur poisoning treatment, can prevent catalytic activity reduction more effectively, and can maintain higher conversion from propane to hydrogen, as compared with those of Comparative Examples.

## Claims

1. A steam reforming catalyst for reforming a hydrocarbon, comprising a catalyst carrier, Ni, and Ti,
wherein
the catalyst carrier contains a composite oxide containing Ce and Zr, the content of the Ce being not less than 1.0 mol and not more than 3.0 mol per 1 mol of the Zr, and
the Ni and Ti are supported on the catalyst carrier, the content of the Ni being not less than 70% and not more than 97% by mole, and the content of the Ti being not less than 3% and not more than 30% by mole, based on 100% by mole of the total of the Ni and Ti.

2. The steam reforming catalyst according to claim 1, wherein the mass ratio of the Ni is not less than 0.1 part and not more than 10 parts by mass, and the mass ratio of the Ti is not less than 0.0025 parts and not more than 3.5 parts by mass, to 100 parts by mass of the catalyst carrier.

3. The steam reforming catalyst according to claim 1 or 2, wherein the composite oxide further contains not less than 0.1 mol and not more than 1.0 mol of W, Si, or a rare-earth element other than Ce per 1 mol of the Zr.

4. The steam reforming catalyst according to any one of claims 1 to 3, wherein the Ni and Ti are present on an outer surface of the catalyst carrier.
